# EUROPEAN PATENT SPECIFICATION

(11) **EP 4 471 973 B1**
(45) Date of publication and mention of the grant of the patent: **14.10.2026**
(21) Application number: 23747317.8
(22) Date of filing: 25.01.2023
(51) Int. Cl.: H01M 50/107, H01M 50/152, H01M 50/533, H01M 50/538, H01M 10/04

(54) **CYLINDRICAL SECONDARY BATTERY**
ZYLINDRISCHE SEKUNDÄRBATTERIE
BATTERIE SECONDAIRE CYLINDRIQUE

(30) Priority: 25.01.2022 KR 20220010937
(43) Date of publication of application: 04.12.2024
(73) Proprietor: LG Energy Solution, Ltd., Seoul 07335 (KR)
(72) Inventor: LIM, Jae Won, Daejeon 34122 (KR); LEE, Je Jun, Daejeon 34122 (KR); JUNG, Ji Min, Daejeon 34122 (KR); KIM, Hak Kyun, Daejeon 34122 (KR)
(74) Representative: Goddar, Heinz J.
(86) International application number: PCT/KR2023/001143
(87) International publication number: WO 2023/146276

(56) References cited:
- EP-A1- 4 243 196
- KR-A- 20160 031 640
- KR-A- 20160 043 724
- KR-A- 20180 018 280
- KR-A- 20210 021 842
- US-A1- 2005 260 487
- US-A1- 2009 208 830
- US-A1- 2014 186 692
- US-A1- 2020 295 319

## Description

### TECHNICAL FIELD

### CROSS-REFERENCE TO RELATED APPLICATION

The present application claims the benefit of the priority of Korean Patent Application No. 10-2022-0010937, filed on January 25, 2022.

### TECHNICAL FIELD

The present invention relates to a cylindrical secondary battery.

### BACKGROUND ART

A cylindrical secondary battery according to a related art generally has a structure in which a tab connecting a jelly-roll to an external terminal is welded to a foil of the jelly-roll. The cylindrical secondary battery having such a structure has a limited current path, and self-resistance of the jelly-roll is inevitably very high.

Thus, since a method for reducing resistance by increasing in number of tabs connecting the jelly-roll to an external terminal has been tried, there is a limit to reduce resistance to a desired level and sufficiently secure a path of current only by increasing in number of tabs as described above.

Thus, it is necessary to develop a new jelly-roll structure and a structure of a collector suitable for the jelly-roll structure in order to reduce the self-resistance of the jelly-roll. Particularly, the jelly-roll having the new structure and the application of the collector are more necessary for devices that require a battery pack having high output/high capacity such as, for example, an electric vehicle.

In addition, in the case of the battery pack applied to the electric vehicle and the like, it is inevitably exposed to a lot of vibration and impact when considering the use environment. Therefore, there is a need to develop a cylindrical secondary battery having a structure in which there is little risk of damage to a welded portion even when vibration and an external impact are applied, and a collector structure applied to the cylindrical secondary battery. Prior art relevant to the present invention includes EP 4 243 196 A1.

### DISCLOSURE OF THE INVENTION

### TECHNICAL PROBLEM

One object to be implemented by the present invention is to provide a cylindrical secondary battery including a collector having a structure suitable for an electrode assembly having a low resistance structure.

Another object to be implemented by the present invention is to provide a cylindrical secondary battery including a collector having a structure that is capable of reducing possibility of damage to a welded portion with an electrode assembly and/or a welded portion with a battery can even when vibration and an impact are applied.

### TECHNICAL SOLUTION

The present invention is defined according to the subject matter of the appended independent claim 1.

The tab coupling part and the can coupling part may non-overlap each other in the height direction of the battery can.

The bridge may be gently inclined as the bridge extends away from the center part.

At least one injection hole may be defined in the tab coupling part. The injection hole may have a width increasing as the injection hole extend away from the center part.

A distance from a central axis of the battery can to an outer edge of the can coupling part is greater than a distance from the central axis of the battery can to an outer edge of the tab coupling part in a radius direction of the battery can.

A beading part press-fitted between the cap plate and the electrode assembly may be disposed on a circumference of the battery can, and the can coupling part may be coupled to the beading part.

The sealing part is configured to surround a circumference of the cap plate. The can coupling part may be interposed between the sealing part and the beading part so as to be fixed.

The can coupling part may include: an outer area overlapping the beading part in the height direction of the battery can; and an inner area disposed inside the outer area and connected to the bridge.

The tab coupling part may non-overlap the beading part in the height direction of the can.

The height difference between the tab coupling part and the can coupling part may correspond to a height of the beading part.

Coupling strength between the battery can and the can coupling part may be greater than coupling strength between the electrode tab and the tab coupling part.

A beading part press-fitted between the cap plate and the electrode assembly may be disposed on a circumference of the battery can, and the can coupling part may be welded on a flat area of the beading part.

A welding bead disposed on the can coupling part may be disposed inward at an interval 0.1 mm or more with respect to a boundary of the flat area.

A height of the body part may correspond to a distance between the collector and the cap plate.

A distance between the connection part and the cap plate may gradually increase as the connection part extends from the body part.

### ADVANTAGEOUS EFFECTS

According to the preferred embodiment of the present invention, when the electrode assembly and the battery can are electrically connected to each other, the resistance may be significantly reduced.

In addition, even when the vibration and impact are applied while the secondary battery is used, the possibility of damage to the welded portion between the collector and the electrode assembly and/or the welded portion between the collector and the battery can may be significantly reduced.

In addition, the effects that are obvious to those skilled in the art may be predicted from the configurations according to the embodiment of the present invention.

### BRIEF DESCRIPTION OF THE DRAWINGS

The following drawings attached in this specification illustrate a preferred embodiment of the present invention and function to make further understood the technical spirit of the present invention along with the detailed description of the invention, and thus, the present invention should not be construed as being limited to only the drawings.
FIG. 1 is a perspective view of a cylindrical secondary battery according to an embodiment of the present invention.
FIG. 2 is a cutaway cross-sectional view of the cylindrical secondary battery according to an embodiment of the present invention.
FIG. 3 is an enlarged cross-sectional view of a first collector and surroundings of the first collector, which are illustrated in FIG. 2.
FIG. 4 is a perspective view of the first collector according to an embodiment of the present invention.
FIG. 5 is a plan view of the first collector according to an embodiment of the present invention.
FIG. 6 is a cross-sectional view taken along line A-A' of FIG. 5.
FIG. 7 is an enlarged cross-sectional view illustrating a state in which the first collector is coupled to a beading part according to an embodiment of the present invention.
FIG. 8 is a plan view illustrating a state in which the first collector is coupled to the beading part according to an embodiment of the present invention.
FIG. 9 is a perspective view of a cap plate and a spacer according to another embodiment of the present invention.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

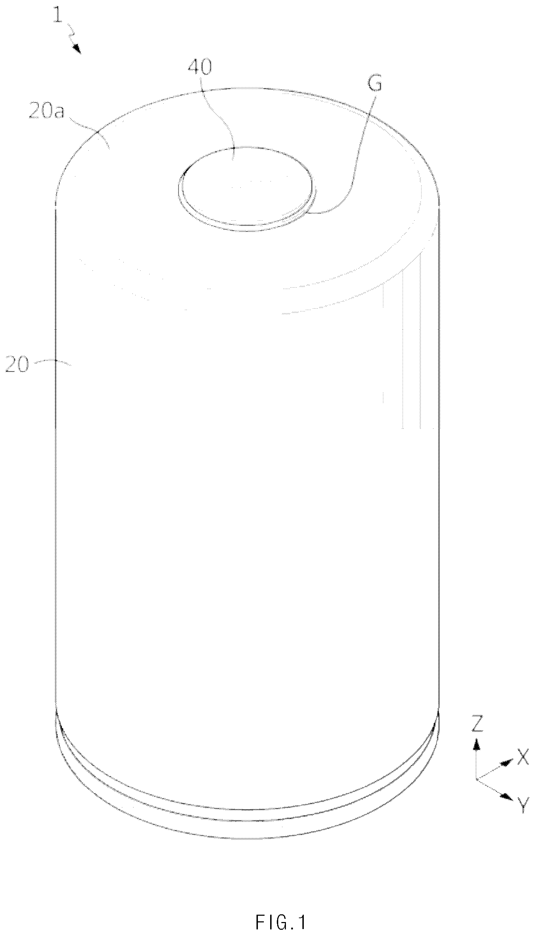

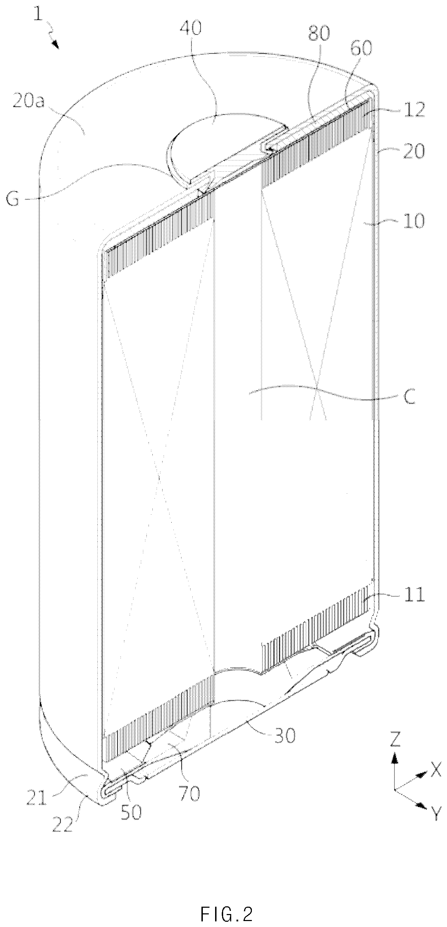

FIG. 1 is a perspective view of a cylindrical secondary battery according to an embodiment of the present invention, and FIG. 2 is a cutaway cross-sectional view of the cylindrical secondary battery according to an embodiment of the present invention.

A cylindrical secondary battery 1 (hereinafter, referred to as 'secondary battery') according to an embodiment of the present invention may include an electrode assembly 10 and a battery can 20 accommodating the electrode assembly 10.

The electrode assembly 10 may include a positive electrode, a negative electrode, and a separator interposed between the positive electrode and the negative electrode. In addition, the electrode assembly 10 may be provided with a first electrode tab 11 connected to one of the positive electrode and the negative electrode, and a second electrode tab 12 connected to the other of the positive electrode and the negative electrode.

In more detail, the electrode assembly 10 may be a jelly-roll type. The electrode assembly 10 may be manufactured by winding a stack in which the positive electrode, the separator, the negative electrode, and the separator are sequentially stacked. The electrode assembly 10 may preferably have a height-to-diameter ratio of 1 or more, but is not limited thereto. A hollow C defined to be elongated in a height direction may be defined in a center of the electrode assembly 10. In order to insulate the electrode assembly 10 from an inner circumference of the battery can 20, the separator may be disposed at the outermost side of the electrode assembly 10.

The first electrode tab 11 and the second electrode tab 12 may be provided on both ends of the electrode assembly 10 in the height direction, respectively. In more detail, a non-coating portion of any one of the positive electrode and the negative electrode may be disposed on one end of the electrode assembly 10 to function as a first electrode tab 11. The non-coating portion of the other of the positive electrode and the negative electrode may be disposed on the other end of the electrode assembly 10 to function as a second electrode tab 12.

Each of the electrode tabs 11 and 12 may extend along a winding direction of the electrode assembly 10.

Alternatively, each of the electrode tabs 11 and 12 may include a plurality of foil-flags disposed along the winding direction of the electrode assembly 10.

A first collector 50 to be described later may be coupled to the first electrode tab 11, and a second collector 60 to be described later may be coupled to the second electrode tab 12. The electrode assembly 10 may be accommodated in the battery can 20 in a state in which the collectors 50 and 60 are coupled to the electrode tabs 11 and 12, respectively.

For example, the first electrode tab 11 may be a non-coating portion of the negative electrode, and the second electrode tab 12 may be a non-coating portion of the positive electrode. In this case, the first collector 50 may be referred to as a negative electrode collector, and the second collector 60 may be referred to as a positive electrode collector.

The battery can 20 may have a substantially cylindrical shape. One surface 20a may be provided at one side of the battery can 20 in the height direction, and an opening may be defined at the other side.

The electrode assembly 10 may be accommodated in the battery can 20 together with an electrolyte through the opening.

The battery can 20 may have a conductive material such as a metal. The battery can 20 may be electrically connected to the first electrode tab 11 through the first collector 50 to be described later. The battery can 20 may have the same polarity as the first electrode tab 11.

A beading part 21 and a crimping part 22 may be provided on the battery can 20. The beading part 21 and the crimping part 22 may be disposed adjacent to the opening of the battery can 20.

The beading part 21 may be disposed by press-fitting a circumference of the battery can 20 to the inside of a radius thereof. An inner diameter of the beading part 21 may be less than an inner diameter of the battery can 20.

The beading part 21 may be provided in a state in which the electrode assembly 10 is accommodated in the battery can 20. The electrode assembly 10 may be restricted between the one surface 20a of the battery can 20 and the beading part 21 in the height direction of the battery can 20. The beading part 21 may prevent the electrode assembly 10 from being separated from the opening of the battery can 20. In addition, the beading part 21 may be coupled to the first collector 50. For example, the first collector 50 may be welded to the beading part 21. Thus, the first collector 50 may electrically connect the first electrode tab 11 to the battery can 20.

The crimping part 22 may be disposed adjacent to the beading part 21. The crimping part 22 may be provided by bending an end of a circumferential surface of the battery can 20 toward the inside of a radius thereof. The crimping part 22 may be formed after the first collector 50 is coupled to the beading part 21. The crimping part 22 may restrict a cap plate 30 to be described later together with the beading part 21.

The secondary battery 1 may include the cap plate 30 covering the opening of the battery can 20.

The cap plate 30 may have a substantially circular plate shape. The cap plate 30 may define an outer appearance of the secondary battery 1 together with the battery can 20. An edge portion of the cap plate 30 may be restricted between the beading part 21 and the crimping part 22 of the battery can 20.

The cap plate 30 may have a material having high rigidity such as a metal. The cap plate 30 may be insulated from the battery can 20 and may not have a polarity. In more detail, a sealing part 72 of a spacer 70 to be described below may be interposed between the cap plate 30 and the battery can 20. This will be described in detail later.

The secondary battery 1 may include a terminal 40 fixed by passing through the one surface 20a of the battery can 20.

The terminal 40 may pass through the one surface 20a of the battery can 20, more specifically, a center of the one surface 20a. A portion of the terminal 40 may be exposed to the outside of the battery can 20, and the other portion of the terminal 40 may be disposed inside the battery can 20. For example, the terminal 40 may be fixed to the one surface 20a of the battery can 20 by riveting.

The terminal 40 may have a conductive material such as a metal.

The terminal 40 may be coupled to the second collector 60 to be described later. For example, the second collector 60 may be welded to the terminal 40. Thus, the second collector 60 may electrically connect the second electrode tab 12 to the terminal 40.

The terminal 40 may be insulated from the battery can 20. In more detail, an insulating gasket G may be interposed between the terminal 40 and the battery can 20. However, it is not limited thereto, and an insulating coating layer may be disposed on a portion of the terminal 40, or a method for structurally fixing the terminal 40 may be applied while spacing the terminal 40 and the battery can 20 apart from each other.

The insulating gasket G may be deformed during the riveting of the terminal 40 and then be bent toward an inner surface of the one surface 20a of the battery can 20. The insulating gasket G may seal a gap between the terminal 40 and the battery can 20.

That is, the battery can 20 and the terminal 40 may have polarities opposite to each other due to the insulating gasket G. In more detail, the battery can 20 may have the same polarity as the first electrode tab 11, and the terminal 40 may have the same polarity as the second electrode tab 12. Thus, the one surface 2a of the battery can 20 may function as a first terminal having a first polarity, and the terminal 40 may function as a second terminal having a second polarity. Since the one surface 2a of the battery can 20 and the terminal 40 are disposed adjacent to each other, an inner space required for installing a bus bar in the battery module including the plurality of secondary batteries 1 may be reduced, and thus, energy density of the battery module may increase.

The secondary battery 1 may include the first collector 50 electrically connecting the first electrode tab 11 to the battery can 20. For example, the first electrode tab 11 may be connected to the negative electrode of the electrode assembly 10, and the first collector 50 may be referred to as a negative electrode collector.

The secondary battery 1 may include the second collector 60 electrically connecting the second electrode tab 11 to the terminal 40. For example, the second electrode tab 12 may be connected to the positive electrode of the electrode assembly 10, and the second collector 60 may be referred to as a positive collector.

The first collector 50 and the second collector 60 may be disposed within the battery can 20.

The first collector 50 may be disposed between the electrode assembly 10 and the cap plate 30 in the height direction of the battery can 20. The first collector 50 may be coupled to the first electrode tab 11. In more detail, the first collector 50 may be welded to the first electrode tab 11. In addition, the first collector 50 may be welded to the battery can 20, more specifically, to the beading part 21.

The second collector 60 may be disposed between the electrode assembly 10 and the one surface 20a of the battery can 20 in the height direction of the battery can 20. The second collector 60 may be coupled to the second electrode tab 12. In more detail, the second collector 60 may be welded to the second electrode tab 12. In addition, the second collector 60 may be welded to the terminal 40.

The secondary battery 1 may include a spacer 70 disposed between the cap plate 30 and the electrode assembly 10. In more detail, the spacer 70 may be disposed between the cap plate 30 and the first collector 50.

A height of the spacer 70 may correspond to a distance between the cap plate 30 and the electrode assembly 10. The spacer 70 may prevent the electrode assembly 10 from moving or shaking within the battery can 20.

The secondary battery 1 may include an insulator 80 disposed between the electrode assembly 10 and the battery can 20. In more detail, the insulator 80 may be disposed between the second collector 60 and the battery can 20.

The insulator 80 may insulate the second collector 60 and the electrode assembly 10 from the battery can 20. The insulator 80 may have a resin material having insulating properties.

A hole through which the terminal 40 passes may be defined in a center of the insulator 80. The terminal 40 may be coupled to the second collector 60 through the hole.

The insulator 80 may have a substantially cap shape. In this case, a portion of the insulator 80 may be disposed between the one surface 20a of the battery can 20 and the second collector 60, and the other portion of the insulator 80 may be disposed between an outer circumference of the second collector 60 and an inner circumference of the battery can 20.

However, it is not limited thereto, and the insulator 80 may have a plate shape disposed between the one surface 20a of the battery can 20 and the second collector 60. In this case, an insulating tape that is separated from the insulator 80 may be interposed between the outer circumference of the second collector 60 and the inner circumference of the battery can 20.

A height of the insulator 80 may correspond to a vertical distance between the one surface 20a of the battery can 20 and the electrode assembly 10. The insulator 80 together with the spacer 70 may prevent the electrode assembly 10 from moving or shaking within the battery can 20.

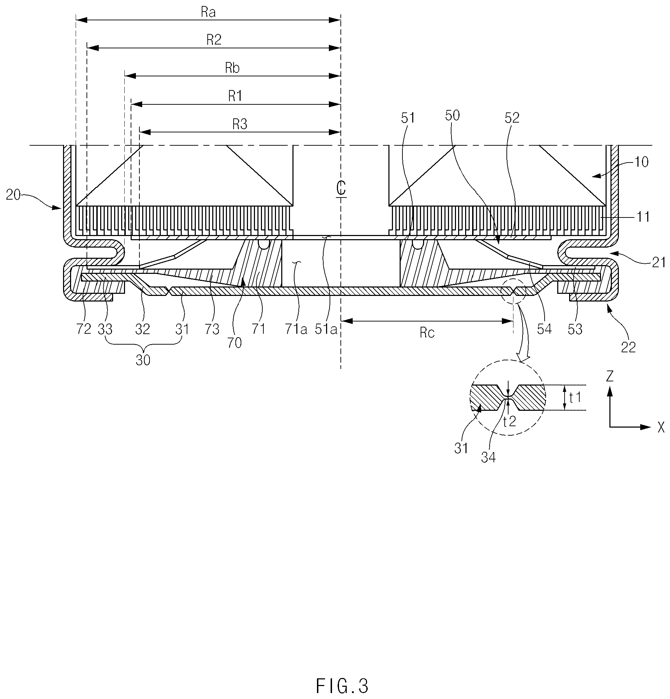

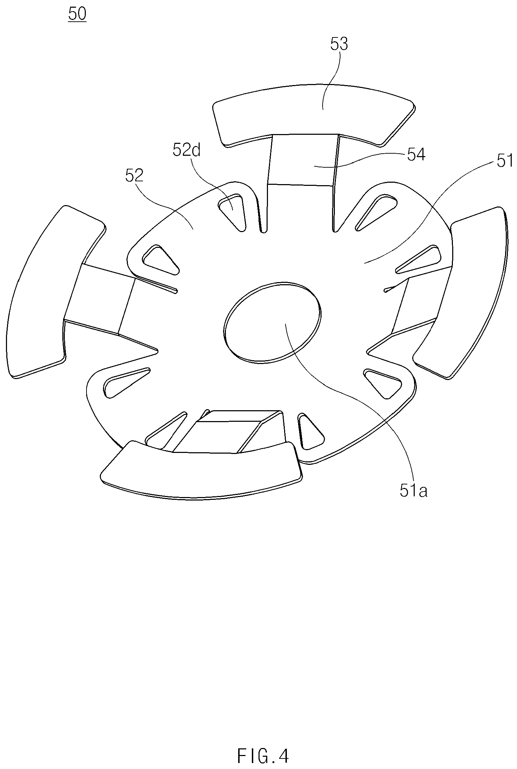

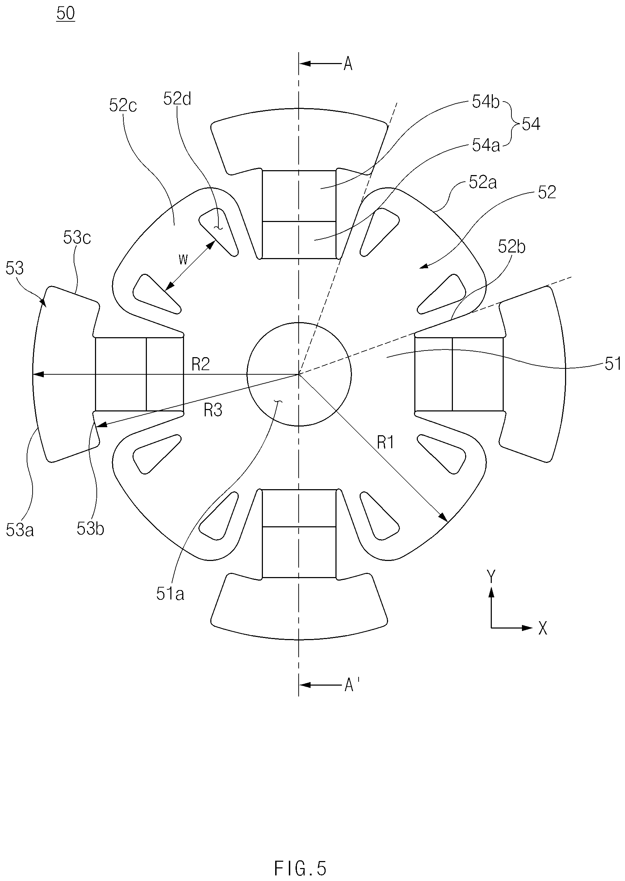

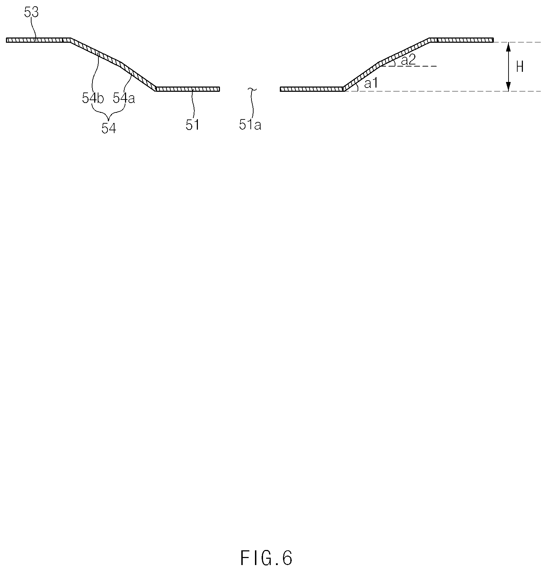

FIG. 3 is an enlarged cross-sectional view of the first collector and surroundings of the first collector, which are illustrated in FIG. 2, FIG. 4 is a perspective view of the first collector according to an embodiment of the present invention, FIG. 5 is a plan view of the first collector according to an embodiment of the present invention, and FIG. 6 is a cross-sectional view taken along line A-A' of FIG. 5.

Hereinafter, the first collector 50 will be described with reference to FIGS. 3 to 6.

As described above, the first collector 50 may be coupled to the first electrode tab 11. In more detail, at least a portion of the first electrode tab 11 may be bent toward a hollow C of the electrode assembly 10, and the first collector 50 may be coupled to the bent portion of the first electrode tab 11.

As a result, a height of the first electrode tab 11 may be reduced, and energy density of the secondary battery 1 may be improved. In addition, since a coupling area between the first electrode tab 11 and the first collector 50 increases, coupling force between the first electrode tab 11 and the first collector 50 may be improved to reduce resistance.

In more detail, the first collector 50 may include a center part 51, a tab coupling part 52 extending outward from the center part 51 and coupled to the first electrode tab 11, a can coupling part 53 coupled to the battery can 20 and spaced apart from the tab coupling part 52, and a bridge 54 connecting the can coupling part 53 to the center part 51.

The center part 51 may be disposed at a center of one side (e.g., lower side) of the electrode assembly 10. A center hole 51a may be defined in the center part 51. The center hole 51a may face the hollow C of the electrode assembly 10. The center hole 51a together with the hollow C may function as a passage for insertion of a welding rod for the coupling between the terminal 40 and the second collector 60 or laser irradiation. In addition, the center hole 51a may function as a passage through which an electrolyte is smoothly impregnated into the electrode assembly 10 when the electrolyte is injected.

The tab coupling part 52 may extend radially outward from the center part 51. The tab coupling part 52 may be coupled to the first electrode tab 11. The tab coupling part 52 may be provided in plurality, and the plurality of tab coupling parts 52 may radially extend from the center part 51.

A width of the tab coupling part 52 may increase as a distance from the center part 51 increases. Thus, the tab coupling part 52 may widely cover the bent portion of the first electrode tab 11 and may prevent the bent portion of the first electrode tab 11 from being lifted.

Central axes of each of the electrode assembly 10, the battery can 20, and the first collector 50 may substantially coincide with each other. A distance R1 from the central axis of the battery can 20 to an outer edge 52a of the tab coupling part 52 may be less than a radius Ra of the electrode assembly 10 and also be equal to or less than an inner radius Rb of the beading part 21 in the radial direction of the battery can 20.

In more detail, the outer edge 52a of the tab coupling part 52 may have an arc shape having a first curvature radius R1. A center of curvature of the outer edge 52a may coincide with the center of the first collector 50.

The first curvature radius R1 may be less than the radius Ra of the electrode assembly 10. In addition, the first curvature radius R1 may be less than the inner radius Rb of the beading part 21 disposed on the battery can 20.

The tab coupling part 52 may non-overlap the beading part 21 in the height direction of the battery can 20. That is, the tab coupling part 52 may not be disposed between the electrode assembly 10 and the beading part 21. Thus, it is possible to prevent the tab coupling part 52 from being damaged by being jammed between the electrode assembly 10 and the beading part 21 due to a sizing process. The sizing refers to a compression process of reducing a height of the beading part 21 to reduce a height of the secondary battery 1 after the beading part 21 and the crimping part 22 are formed on the battery can 20 in which the electrode assembly 10 is accommodated.

The distance R1 from the central axis of the battery can 20 to the outer edge 52a of the tab coupling part 52 may be equal to or greater than 2/3 of the radius Ra of the electrode assembly 10. In more detail, the first curvature radius R1 may be 2/3 or more of the radius Ra of the electrode assembly 10. Thus, a sufficiently wide contact area of the tab coupling part 52 with respect to the electrode tab 11 of the electrode assembly 10 may be secured.

Both edges 52b of the tab coupling part 52 may be disposed along the radial direction of the first collector 50. A virtual line extending along both the edges 52b may pass through the center of the first collector 50.

An injection hole 52d may be defined in the tab coupling part 52. The impregnation of the electrolyte into the electrode assembly 10 may be improved by the injection hole 52d.

The injection hole 52d may be disposed outside the coupling area 52c coupled to the first electrode tab 11 on the tab coupling part 52. For example, a pair of injection holes 52d may be defined in the tab coupling part 52, and the pair of injection holes 52d may be disposed with a coupling area 52c interposed therebetween. In this case, a width W of the coupling area 52c may be provided to be constant. The pair of injection holes 52d may have symmetrical shapes with respect to the coupling area 52c.

The width of the injection hole 52d may increase as a distance from the center part 51 increases. As a result, the electrolyte may be impregnated more uniformly with respect to the electrode assembly 10 in which a winding length per unit angle becomes longer toward the outside of the radius.

The can coupling part 53 may be coupled to the battery can 20, more specifically to the beading part 21. The can coupling part 53 may be coupled to a surface disposed relatively far from the electrode assembly 10 on the beading part 21.

The can coupling part 53 may have a predetermined height difference H with respect to the center part 51 and the tab coupling part 52. The height difference H may mean a distance between the tab coupling part 52 and the can coupling part 53 with respect to the height direction of the battery can 20. The height difference H may correspond to the height of the beading part 21. That is, the distance between the tab coupling part 52 and the can coupling part 53 in the height direction of the battery can 20 may be the same as or similar to the height of the beading part 21.

The can coupling part 53 may be pressed by a sealing part 72 to be described later. In more detail, the can coupling part 53 may be interposed and fixed between the sealing part 72 and the beading part 21.

The can coupling part 53 may be spaced apart from the tab coupling part 52. In more detail, each of the can coupling part 53 and the tab coupling part 52 may be only connected to the center part 51, and the can coupling part 53 and the tab coupling part 52 may not be directly connected to each other. As a result, when an impact or vibration is applied to the secondary battery 1, since stress applied to the coupling area between the tab coupling part 52 and the first electrode tab 11 and the coupled portion between the can coupling part 53 and the battery can 20 are dispersed, possibility of occurrence of damage of the first collector 50 may be minimized.

The can coupling part 53 may be provided in plurality. The can coupling part 53 and the tab coupling part 52 may be alternately disposed in a circumferential direction of the first collector 50.

The can coupling part 53 may extend along the inner circumference of the battery can 20. That is, the can coupling part 53 may extend in the circumferential direction of the beading part 21. Thus, since a contact area between the can coupling part 53 and the beading part 21 increases, the can coupling part 53 and the beading part 21 may be stably coupled to each other, and the resistance between the can coupling part 53 and the beading part 21 may decrease.

The distance R2 from the central axis of the battery can 20 to the outer edge 53a of the can coupling part 53 may be greater than the distance R1 from the central axis of the battery can 20 to the outer edge 52a of the tab coupling part 52 in the radial direction of the battery can 20. In addition, the distance R3 from the central axis of the battery can 20 to the inner edge 53b of the can coupling part 53 may be less than the distance R2 from the central axis of the battery can 20 to the outer edge 53a of the can coupling part 53 in the radial direction of the battery can 20.

In more detail, the outer edge 53a of the can coupling part 53 may have an arc shape having a second curvature radius R2 greater than the first curvature radius R1 described above. Also, the inner edge 53a of the can coupling part 53 may have an arc shape having a third curvature radius R2 less than the second curvature radius R2. The center of curvature of the outer edge 53a and the inner edge 53b of the can coupling part 53 may substantially coincide with the central axis of the battery can 20.

The second curvature radius R2 may be greater than the inner radius Rb of the beading part 21 disposed on the battery can 20, and the third curvature radius R3 may be less than the inner radius Rb of the beading part 21. That is, the distance R2 from the central axis of the battery can 20 to the outer edge 53a of the can coupling part 53 may be greater than the inner radius Rb of the beading part 21, and the distance R3 from the central axis of the battery can 20 to the inner edge 53b of the can coupling part 53 may be less than the inner radius Rb of the beating part 21 in the radial direction of the battery can 20.

If the second curvature radius R2 is equal to or less than the inner radius Rb of the beading part 21, it may be difficult to couple the can coupling part 53 to the beading part 21. If the third curvature radius R3 is equal to or greater than the inner radius Rb of the beading part 21, interference may occur between the bridge 54 to be described later and the beading part 21.

Both edges 53c of the can coupler 53 may be disposed along the radial direction of the first collector 50. A virtual line extending along both the edges 52c may pass through the center of the first collector 50.

The can coupling part 53 and the tab coupling part 52 may non-overlap each other in the height direction of the battery can 20. Thus, when the plurality of first collectors 50 that is in a state before being coupled to the electrode assembly 10 are loaded, the can coupling parts 53 of one first collector 50 and the tab coupling part 52 of the other first collector 50 may be prevented from interfering with each other.

Coupling strength between the can coupling part 53 and the battery can 20, more specifically, between the can coupling part 53 and the beading part 21, may be greater than that between the tab coupling part 52 and the first electrode tab 11. Thus, the can coupling part 53 may be stably coupled to the rigid battery can 20.

The bridge 54 may connect the can coupling part 53 to the center part 51. The bridge 54 may extend radially outward from the center part 51 and may be spaced apart from the tab coupling part 52 in the circumferential direction of the first collector 50.

The bridge 54 may be provided in plurality, like the can coupler 53, and the plurality of bridges 54 may extend radially from the center part 51. The bridges 54 and the tab coupling parts 52 may be alternately disposed in the circumferential direction of the first collector 50.

Since there is a height difference H between the center part 51 and the can coupling part 53, the bridge 54 may be inclined. The bridge 54 may obliquely extend in a direction away from the electrode assembly 10 as the distance from the center part 51 increases.

An inclination of the bridge 54 may become gentler as the distance from the center part 51 increases. In more detail, the bridge 54 may include a first inclined part 54a extending from the center part 51 and a second inclined part 54b extending from the first inclined part 54a and having a gentler inclination than the first inclined part 54a.

The first inclined part 54a may form a first angle a1, and the second inclined part 54b may form a second angle a2 less than the second angle a2 on a horizontal plane that is orthogonal to the height direction of the battery can 20.

However, it is not limited thereto, and the bridge 54 may be rounded in a direction that becomes gentler as the distance from the center part 51 increases.

Thus, it is possible to prevent the bridge 54 from being excessively deformed due to the sizing process and prevent the center part 51 and the first electrode tab 11 coupled to the center part 51 from being lifted. During the sizing process, since the beading part 21 is compressed toward the electrode assembly 10 to decrease in height, the tab coupling part 53 coupled to the beading part 21 may also move toward the electrode assembly 10. As a result, repulsive force in a direction away from the electrode assembly 10 may act on the center part 51 connected to the tab coupling part 53 and the bridge 54. If the inclination of the bridge 54 is constant or becomes steeper as the bridge extends away from the center part 51, the repulsive force may largely act on the center part 51, and thus, the center part 51 and the first electrode tab 11 coupled to the center part 51 may be lifted. On the other hand, the bridge 54 according to the present embodiment may minimize the lifting of the center part 51 and the first electrode tab 11, which is caused by the sizing process.

In addition, a process of press-fitting the outer circumference of the battery can 20 to the inside of the radius to form the beading part 21 may be performed in a state in which the electrode assembly 10 to which the first collector 50 is coupled is accommodated in the battery can 20. In this process, since the bridge 54 is gently inclined as the bridge extends away from the center part 51, the beading part 21 may be easily formed without interfering with the bridge 54.

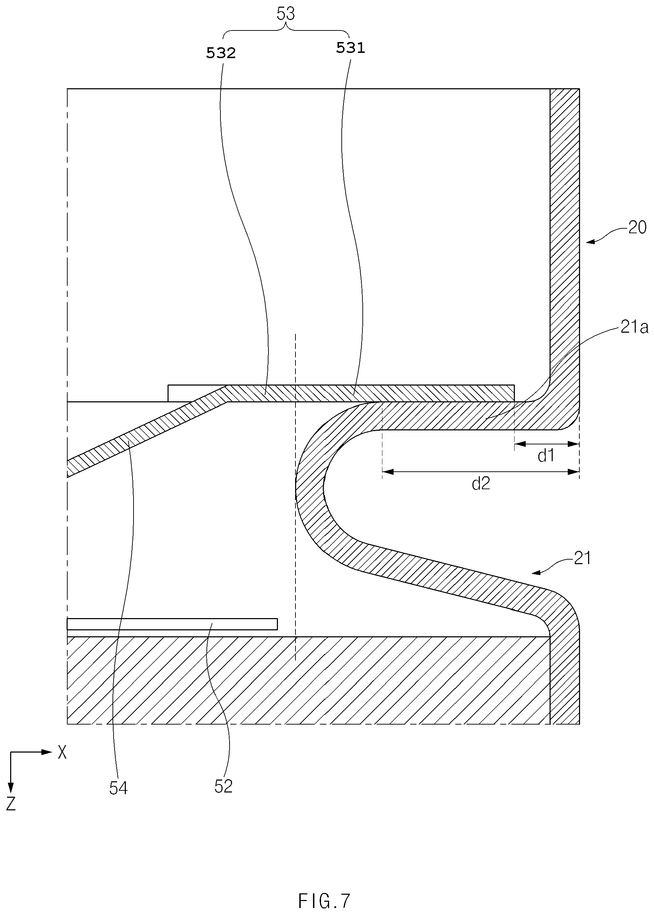

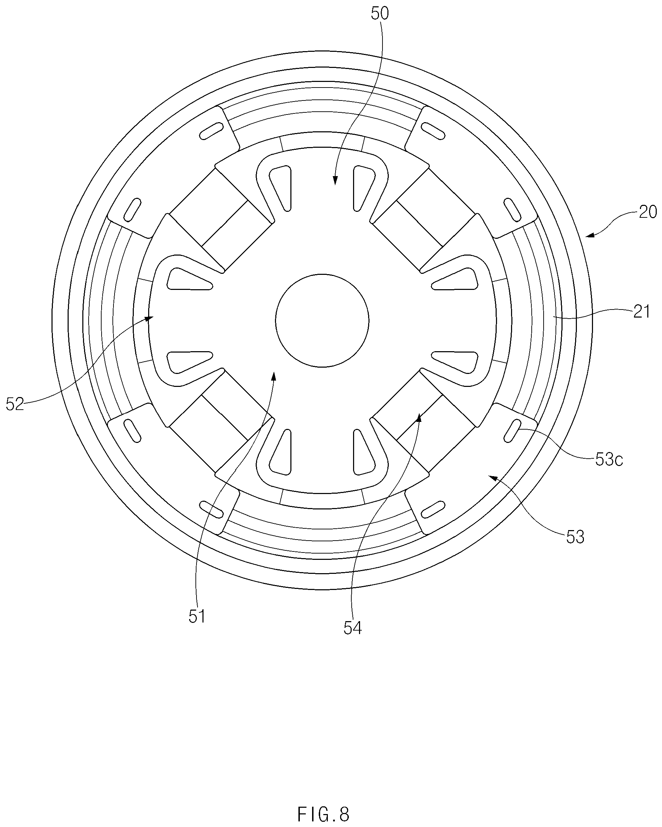

FIG. 7 is an enlarged cross-sectional view illustrating a state in which the first collector is coupled to the beading part according to an embodiment of the present invention, and FIG. 8 is a plan view illustrating a state in which the first collector is coupled to the beading part according to an embodiment of the present invention.

The coupling between the can coupling part 53 of the first collector 50 and the beading part 21 may be performed before the crimping part 22 (see FIG. 3) is formed on the battery can 20.

The can coupling part 53 may include an outer area 531 overlapping the beading part 21 in the height direction of the battery can 20 and an inner area 532 disposed inside the outer area 531. That is, a portion of the inside of the can coupling part 53 may non-overlap the beading part 21 in the height direction of the battery can 20. Since the inner area 532 is connected to the bridge 54 described above, it is possible to minimize a risk of the interference between the beading part 21 and the bridge 54.

The can coupling part 53 may be welded to a flat area 21a on the beading part 21. That is, the welding bead 53d disposed on the can coupling part 53 may be disposed on the flat area 21a.

The welding bead 53d may be disposed to be elongated in the circumferential direction of the beading part 21. At least one welding bead 53d may be disposed on each of the can coupling parts 53.

When forming the beading part 21, a portion connecting the circumference of the battery can 20 to the beading part 21 may be rounded. Thus, the flat area 21a may be spaced apart from the inner circumference of the battery can 20 in a radially inward direction of the battery can 20.

A welded position of the can coupling part 53 with respect to the flat area 21a may be spaced apart from a boundary of the flat area 21a. That is, the welding bead 53d disposed on the can coupling part 53 may be disposed at the inside at a predetermined interval with respect to the boundary of the flat area 21a. Preferably, the welding bead 53d may be disposed inward at an interval of 0.1 mm or more with respect to the boundary of the flat area 21a. For example, a distance d1 up to an outer boundary of the flat area 21a may be 1.95 mm, and a distance d2 up to an inner boundary of the flat area 21a may be 3.15 mm, based on the outer circumference of the battery can 20. In this case, a position of the welding bead 53d may be disposed on an area of 2.05 mm to 3.05 mm, based on the outer circumference of the battery can 20.

As a result, it is possible to eliminate the concern that the welding bead 53d of the can coupling part 53 crosses the boundary of the flat area 21a, and the can coupling part 53 may be stably welded to the flat area 21a.

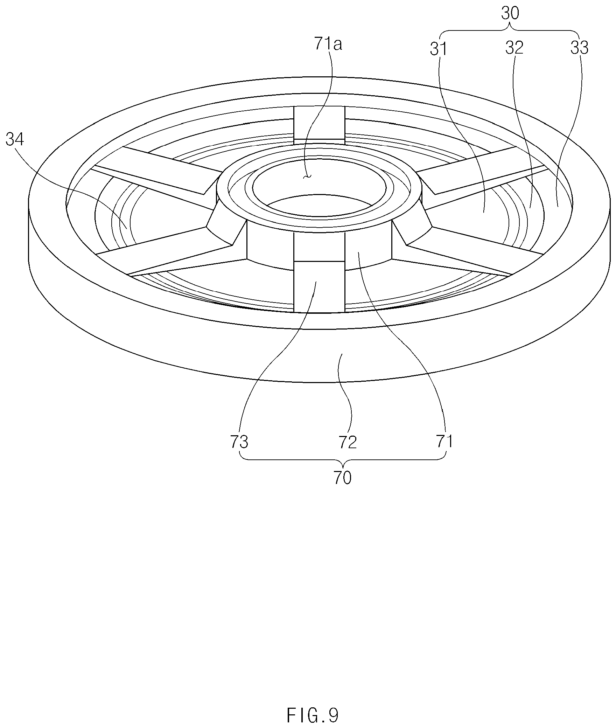

FIG. 9 is a perspective view of a cap plate and a spacer according to another embodiment of the present invention.

Hereinafter, a cap plate 30 and a spacer 70 will be described with reference to FIGS. 3 and 9.

The cap plate 30 may include a plate part 31, an inclined part 32 extended around the plate part 31 and inclined, and an edge part 33 extending from the inclined part 32. The plate part 31, the inclined part 32, and the edge part 33 may be integrated with each other.

The plate part 31 may have a substantially flat disc shape. The inclined part 32 may be inclined in a direction closer to the electrode assembly 10 as the distance from the plate part 31 increases.

The edge part 33 may be substantially parallel to the plate part 31 and may have a predetermined height difference with respect to the plate part 31. In more detail, a distance from the electrode assembly 10 to the plate part 31 may be greater than that from the electrode assembly 10 to the edge part 31 in the height direction of the battery can 20.

The edge part 33 may be disposed between a beading part 21 and a crimping part 22 of the battery can 20. The edge part 33 may be fixed by a sealing part 72 to be described later.

Thus, rigidity of the cap plate 30 may increase compared to the case in which the entire cap plate 30 is flat.

A venting part 34 may be provided in the cap plate 30. In more detail, the venting part 31 may be disposed in the plate part 31 of the cap plate 30.

The venting part 34 may have a thickness less than that of the plate part 31. Thus, the venting part 34 may be structurally weak compared to a surrounding area thereof, and if an internal pressure of the battery can 20 increases beyond a preset value, the venting part 34 may be preferentially ruptured.

The venting part 34 may be disposed along a circumferential direction of the cap plate 30. For example, the venting part 34 may have a closed loop shape such as a ring. Therefore, when the venting part 34 is ruptured, an area of the cap plate 30 disposed inside the venting part 34 may be easily separated to form an opening, and a gas in the battery can 20 may be quickly discharged.

If the internal pressure of the battery can 20 is the same, the larger the area of the cap plate 30 disposed inside the venting part 34 is, the greater force applied to the venting part 34 increases. Therefore, for rapid rupture of the venting part 34, the venting part 34 may be disposed closer to the inclined part 32 than to a center of the plate part 31. Preferably, the venting part 31 may be disposed adjacent to the inclined part 32.

A thickness t2 of the venting part 34 may be less than 1/10 of a thickness t1 of the cap plate 30, more specifically, the plate part 31. When the thickness t2 of the venting part 34 is greater than 1/10 of the thickness t1 of the plate part 31, the venting part 34 may not be easily ruptured.

The venting part 34 may be formed by notching both surfaces of the cap plate 30 to a predetermined depth to partially reduce the thickness of the cap plate 30. When only one surface of the cap plate 30 is notched, a shape of the cap plate 30 may be deformed.

The center of the cap plate 30 may coincide with a center axis of the battery can 20. When the venting part 31 is disposed along a circumferential direction of the cap plate 30, a distance from the center of the cap plate 30 to the venting part 31 may be a curvature radius Rc of a closed curve formed by the venting part 31.

A portion of the venting part 34 may overlap a tab coupling part 52 of a first collector 50 in a height direction of the battery can 20. In more detail, a distance R1 from the central axis of the battery can 20 to an outer edge 52a of the tab coupling part 52 of the first collector 50 may be greater than a distance Rc to the venting part 34. That is, the first curvature radius R1 may be greater than the curvature radius Rc of the venting part 31. This may be a feature for the tab coupling part 52 to have a sufficiently wide contact area with the first electrode tab 11.

The cap plate 30 may not protrude from the battery can 20. For example, when the cap plate 30 is disposed on a lower end of the battery can 20, a bottom surface of the plate part 31 of the cap plate 30 may be disposed on the same surface as the bottom surface of the battery can 20 or be disposed higher than the bottom surface of the battery can 20. Thus, the cap plate 30 may not be pressed upward by the bottom surface supporting the battery can 20, and a phenomenon in which a pressure required for rupturing the venting part 34 due to a weight of the secondary battery 1 is different from a design value may be prevented from occurring.

The spacer 70 may prevent shaking or movement of the electrode assembly 10 and enhance sealing force of the battery can 20. In order to effectively absorb an impact or shaking applied to the secondary battery 1, the spacer 70 may have an elastic material.

In more detail, the spacer 70 may include a body part 71 disposed between the first collector 50 and the cap plate 30, a sealing part 72 sealing a gap between the battery can 20 and the cap plate 30, and a connection part 73 connecting the body part 71 to the sealing part 72. The body part 71, the sealing part 72, and the connection portion 73 may be integrated with each other.

The body part 71 may be disposed approximately at a center of the electrode assembly 10 with the first collector 50 therebetween. The body part 71 may face the first collector 50, more specifically, a center part 51.

A spacer hole 71a facing a hollow C of the electrode assembly 10 may be defined in the body part 71 through a center hole 51a of the first collector 50. The spacer hole 71a together with the center hole 51a and the hollow C may function as a passage for inserting a welding rod or a passage for laser irradiation. In addition, the spacer hole 71a may function as a passage through which an electrolyte is smoothly impregnated into the electrode assembly 10.

A height of the body part 71 may correspond to a distance between the first collector 50 and the cap plate 30. In this case, the body part 71 may effectively prevent the electrode assembly 10 from moving within the battery can 20 due to a gap defined between the first collector 50 and the cap plate 30. Therefore, the body part 71 may prevent a coupled portion between the electrode assembly 10 and the first collector 50 and/or a coupled portion between the first collector 50 and the battery can 20 from being damaged.

Before a sizing process is performed, the distance between the first collector 50 and the cap plate 30 may be greater than a height of the body part 71, and then, a height of the beading part 21 may be reduced by the sizing process so that the distance between the first collector 50 and the cap plate 30 is equal to or similar to the height of the body part 71. Therefore, the body part 71 may not be elastically deformed between the cap plate 30 and the first collector 50, and the body part 71 may not press the first collector 50. Thus, it is possible to prevent the first collector 50 from being damaged by the spacer 70.

The sealing part 72 may have a circular ring shape extending along an inner circumference of the battery can 20. The sealing part 72 may be fixed between the beading part 21 and the crimping unit 22 of the battery can 20. A portion of the sealing part 72 may be bent together with a crimping part 22 to fix the cap plate 30, more specifically, an edge part 33. Thus, the sealing part 72 may firmly seal the gap between the cap plate 30 and the battery can 20. As described above, the sealing part 72 may function as a gasket for improving fixing force of the cap plate 30 and sealing force of the battery can 20.

The sealing part 72 may press the can coupling part 53 of the first collector 50 toward the beading part 21 to further strengthen the coupling between the can coupling part 53 and the beading part 21. In addition, the sealing part 72 may insulate the can coupling part 53 from the cap plate 30.

The connection part 73 may connect the body part 71 to the sealing part 72. The connection part 73 may be provided in plurality, and the plurality of connection parts 73 may radially extend from the body part 71 to the sealing part 72. Electrolyte injection may be smoothly performed through a space between the plurality of connection parts 73. In addition, when the venting part 34 is ruptured as an internal pressure of the battery can 20 increases, a gas inside the battery can 20 may be smoothly discharged through the space between the plurality of connecting parts 73.

A distance between the connection part 73 and the cap plate 30 may increase as a distance from the body part 71 increases. In more detail, a distance between the connection part 73 and the plate part 31 of the cap plate 30 may increase toward an outer radial direction of the battery can 20 in the height direction of the battery can 20.

Thus, the deformation of the connection part 73 of the spacer 70, which is caused by compressive force applied to the battery can 20 in the height direction during the sizing process, may be minimized, and even if the deformation occurs, interference with the cap plate 30 may be minimized.

The connection part 73 may non-overlap a bridge 54 of the first collector 50 in the height direction of the battery can 20. The connection part 73 may overlap the tab coupling part 52 of the first collector 50 in the height direction of the battery can 20.

In more detail, the plurality of bridges 54 of the first collector 50 and the plurality of connection parts 73 of the spacer 70 may be arranged alternately so as not to overlap each other in the height direction of the battery can 20. That is, the plurality of bridges 54 and the plurality of connection parts 73 may be alternately disposed in a circumferential direction.

Thus, when the deformation occurs in the connection part 73 of the spacer 70 and the bridge 54 of the first collector 50 due to the compressive force applied to the battery can 20 in the height direction during the sizing process, the interference between the connection part 73 and the bridge 54 may be prevented from occurring.

Therefore, the scope of the present disclosure is defined not by the detailed description of the invention but by the appended claims.

### [Description of the Symbols]

| | | | |
|---|---|---|---|
| 1: | Cylindrical secondary battery | 10: | Electrode assembly |
| 11: | First electrode tab | 12: | Second electrode tab |
| 20: | Battery can | 21: | Beading part |
| 21a: | Flat area | 22: | Crimping part |
| 30: | Cap plate | 31: | Plate part |
| 32: | Inclined part | 33: | Edge part |
| 34: | Venting part | 40: | Terminal |
| 50: | First collector | 51: | Center part |
| 51a: | Center hole | 52: | Tab coupling part |
| 52a: | Outer edge (of tab coupling part) | | |
| 52b: | Both edges (of tab coupling part) | | |
| 52c: | Coupling area | 52d: | Injection hole |
| 53: | Can coupling part | 531: | Outer area |
| 532: | Inner area | 53a: | Outer edge (of can coupling part) |
| 53b: | Inner edge (of can coupling part) | | |
| 53c: | Both edges (of can coupling part) | | |
| 53d: | Welding bead | 54: | Bridge |
| 54a: | First inclined part | 54b: | Second inclined part |
| 60: | Second collector | 70: | Spacer |
| 71: | Body part | 72: | Sealing part |
| 73: | Connection part | 80: | Insulator |

## Claims

1. A cylindrical secondary battery (1) comprising:
an electrode assembly (10) provided with an electrode tab (11);
a battery can (20) configured to accommodate the electrode assembly (10) through an opening defined at one side thereof;
a cap plate (30) configured to cover the opening;
a collector (50) disposed between the electrode assembly (10) and the cap plate (30) to electrically connect the electrode tab (11) to the battery can (20); and
a spacer (70) comprising a body part (71) disposed between the collector (50) and the cap plate (30), a sealing part (72) configured to seal a gap between the battery can (20) and the cap plate (30), and a connection part (73) configured to connect the body part (71) to the sealing part (72),
wherein the collector (50) comprises:
a center part (51);
a tab coupling part (52) expanded outward from the center part (51) and coupled to the electrode tab (11);
a can coupling part (53) coupled to the battery can (20) and having a height difference with respect to the tab coupling part (52); and
a bridge (54) connecting the center part (51) to the can coupling part (53) and extending so as to be inclined in a direction away from the electrode assembly (10) as the bridge (54) extends away from the center part (51),
wherein the bridge (54) of the collector (50) and the connection part (73) of the spacer (70) are alternately so as not to overlap each other in a height direction of the battery can (20),
wherein a distance from a central axis of the battery can (20) to an outer edge (53a) of the can coupling part (53) is greater than a distance from the central axis of the battery can (20) to an outer edge (52a) of the tab coupling part (52) in a radius direction of the battery can (20).

2. The cylindrical secondary battery (1) of claim 1, wherein the tab coupling part (52) and the can coupling part (53) non-overlap each other in the height direction of the battery can (20).

3. The cylindrical secondary battery (1) of claim 1, wherein the bridge (54) is gently inclined as the bridge (54) extends away from the center part (51).

4. The cylindrical secondary battery (1) of claim 1, wherein at least one injection hole (52d) is defined in the tab coupling part (52),
wherein the injection hole (52d) has a width increasing as the injection hole (52d) extends away from the center part (51).

5. The cylindrical secondary battery (1) of claim 1, wherein a beading part (21) press-fitted between the cap plate (30) and the electrode assembly (10) is disposed on a circumference of the battery can (20), and
the can coupling part (53) is coupled to the beading part (21).

6. The cylindrical secondary battery (1) of claim 5, wherein the sealing part (72) is configured to surround a circumference of the cap plate (30),
wherein the can coupling part (53) is interposed between the sealing part (72) and the beading part (21) so as to be fixed.

7. The cylindrical secondary battery (1) of claim 5, wherein the can coupling part (53) comprises:
an outer area (531) overlapping the beading part (21) in the height direction of the battery can (20); and
an inner area (532) disposed inside the outer area and connected to the bridge (54).

8. The cylindrical secondary battery (1) of claim 5, wherein the tab coupling part (52) non-overlaps the beading part (21) in the height direction of the can (20).

9. The cylindrical secondary battery (1) of claim 5, wherein the height difference between the tab coupling part (52) and the can coupling part (53) corresponds to a height of the beading part (21).

10. The cylindrical secondary battery (1) of claim 1, wherein coupling strength between the battery can (20) and the can coupling part (53) is greater than coupling strength between the electrode tab (11) and the tab coupling part (52).

11. The cylindrical secondary battery (1) of claim 1, wherein a beading part (21) press-fitted between the cap plate (30) and the electrode assembly (10) is disposed on a circumference of the battery can (20), and
the can coupling part (53) is welded on a flat area (21a) of the beading part (21).

12. The cylindrical secondary battery (1) of claim 11, wherein a welding bead (53d) disposed on the can coupling part (53) is disposed inward at an interval 0.1 mm or more with respect to a boundary of the flat area (21a).

13. The cylindrical secondary battery (1) of claim 1, wherein a height of the body part (71) corresponds to a distance between the collector (50) and the cap plate (30).

14. The cylindrical secondary battery (1) of claim 1, wherein a distance between the connection part (73) and the cap plate (30) gradually increases as the connection part (73) extends from the body part (71).

## Patentansprüche

1. Zylindrische Sekundärbatterie (1) aufweisend:
eine Elektrodenanordnung (10), die mit einer Elektrodenlasche (11) versehen ist;
ein Batteriegehäuse (20), das konfiguriert ist, die Elektrodenanordnung (10) durch eine Öffnung aufzunehmen, die an einer Seite davon definiert ist;
eine Abdeckplatte (30), die konfiguriert ist, die Öffnung abzudecken;
einen Kollektor (50), der zwischen der Elektrodenanordnung (10) und der Abdeckplatte (30) angeordnet ist, um die Elektrodenlasche (11) elektrisch mit dem Batteriegehäuse (20) zu verbinden; und
einen Abstandshalter (70) aufweisend einen Körperteil (71), der zwischen dem Kollektor (50) und der Abdeckplatte (30) angeordnet ist, einen Dichtungsteil (72), der konfiguriert ist, einen Spalt zwischen dem Batteriegehäuse (20) und der Abdeckplatte (30) dicht zu verschließen, und einen Verbindungsteil (73), der konfiguriert ist, den Körperteil (71) mit dem Dichtungsteil (72) zu verbinden,
wobei der Kollektor (50) aufweist:
einen Mittelteil (51);
einen Laschenkopplungsteil (52), der sich von dem Mittelteil (51) nach außen erstreckt und mit der Elektrodenlasche (11) gekoppelt ist;
einen Gehäusekopplungsteil (53), der mit dem Batteriegehäuse (20) gekoppelt ist und einen Höhenunterschied in Bezug auf den Laschenkopplungsteil (52) aufweist; und
eine Brücke (54), die den Mittelteil (51) mit dem Gehäusekopplungsteil (53) verbindet und sich so erstreckt, dass sie in einer Richtung weg von der Elektrodenanordnung (10) geneigt ist, während sich die Brücke (54) von dem Mittelteil (51) weg erstreckt,
wobei die Brücke (54) des Kollektors (50) und der Verbindungsteil (73) des Abstandshalters (70) abwechselnd so sind, dass sie einander in einer Höhenrichtung des Batteriegehäuses (20) nicht überlappen,
wobei ein Abstand von einer Mittelachse des Batteriegehäuses (20) zu einem Außenrand (53a) des Gehäusekopplungsteils (53) größer ist als ein Abstand von der Mittelachse des Batteriegehäuses (20) zu einem Außenrand (52a) des Laschenkopplungsteils (52) in einer Radiusrichtung des Batteriegehäuses (20).

2. Zylindrische Sekundärbatterie (1) nach Anspruch 1, wobei der Laschenkopplungsteil (52) und der Gehäusekopplungsteil (53) in der Höhenrichtung des Batteriegehäuses (20) nicht überlappen.

3. Zylindrische Sekundärbatterie (1) nach Anspruch 1, wobei die Brücke (54) leicht geneigt ist, während sich die Brücke (54) von dem Mittelteil (51) weg erstreckt.

4. Zylindrische Sekundärbatterie (1) nach Anspruch 1, wobei mindestens ein Einspritzloch (52d) in dem Laschenkopplungsteil (52) definiert ist,
wobei das Einspritzloch (52d) eine Breite aufweist, die zunimmt, während sich das Einspritzloch (52d) von dem Mittelteil (51) weg erstreckt.

5. Zylindrische Sekundärbatterie (1) nach Anspruch 1, wobei ein Sickenteil (21), der zwischen der Abdeckplatte (30) und der Elektrodenanordnung (10) pressgepasst ist, an einem Umfang des Batteriegehäuses (20) angeordnet ist, und
der Gehäusekopplungsteil (53) mit dem Sickenteil (21) gekoppelt ist.

6. Zylindrische Sekundärbatterie (1) nach Anspruch 5, wobei der Dichtungsteil (72) konfiguriert ist, einen Umfang der Abdeckplatte (30) zu umgeben,
wobei der Gehäusekopplungsteil (53) zwischen dem Dichtungsteil (72) und dem Sickenteil (21) eingefügt ist, um fixiert zu sein.

7. Zylindrische Sekundärbatterie (1) nach Anspruch 5, wobei der Gehäusekopplungsteil (53) aufweist:
einen Außenbereich (531), der den Sickenteil (21) in der Höhenrichtung des Batteriegehäuses (20) überlappt; und
einen Innenbereich (532), der innerhalb des Außenbereichs angeordnet und mit der Brücke (54) verbunden ist.

8. Zylindrische Sekundärbatterie (1) nach Anspruch 5, wobei der Laschenkopplungsteil (52) den Sickenteil (21) in der Höhenrichtung des Gehäuses (20) nicht überlappt.

9. Zylindrische Sekundärbatterie (1) nach Anspruch 5, wobei der Höhenunterschied zwischen dem Laschenkopplungsteil (52) und dem Gehäusekopplungsteil (53) einer Höhe des Sickenteils (21) entspricht.

10. Zylindrische Sekundärbatterie (1) nach Anspruch 1, wobei die Kopplungsstärke zwischen dem Batteriegehäuse (20) und dem Gehäusekopplungsteil (53) größer ist als die Kopplungsstärke zwischen der Elektrodenlasche (11) und dem Laschenkopplungsteil (52).

11. Zylindrische Sekundärbatterie (1) nach Anspruch 1, wobei ein Sickenteil (21), der zwischen der Abdeckplatte (30) und der Elektrodenanordnung (10) pressgepasst ist, an einem Umfang des Batteriegehäuses (20) angeordnet ist, und
der Gehäusekopplungsteil (53) an einen ebenen Bereich (21a) des Sickenteils (21) geschweißt ist.

12. Zylindrische Sekundärbatterie (1) nach Anspruch 11, wobei eine Schweißraupe (53d), die an dem Gehäusekopplungsteil (53) angeordnet ist, in einem Abstand von 0,1 mm oder mehr in Bezug auf eine Grenze des ebenen Bereichs (21a) nach innen angeordnet ist.

13. Zylindrische Sekundärbatterie (1) nach Anspruch 1, wobei eine Höhe des Körperteils (71) einem Abstand zwischen dem Kollektor (50) und der Abdeckplatte (30) entspricht.

14. Zylindrische Sekundärbatterie (1) nach Anspruch 1, wobei ein Abstand zwischen dem Verbindungsteil (73) und der Abdeckplatte (30) allmählich zunimmt, während sich der Verbindungsteil (73) von dem Körperteil (71) erstreckt.

## Revendications

1. Batterie secondaire cylindrique (1), comprenant :
un ensemble d'électrodes (10) doté d'une languette d'électrode (11) ;
un boîtier de batterie (20) configuré pour accueillir l'ensemble d'électrodes (10) à travers une ouverture définie sur un côté de celui-ci ;
une plaque de recouvrement (30) configurée pour couvrir l'ouverture ;
un collecteur (50) disposé entre l'ensemble d'électrodes (10) et la plaque de recouvrement (30) pour connecter électriquement la languette d'électrode (11) au boîtier de batterie (20) ; et
une entretoise (70) comprenant une partie du corps (71) disposée entre le collecteur (50) et la plaque de recouvrement (30), une pièce d'étanchéité (72) configurée pour sceller un espace entre le boîtier de batterie (20) et la plaque de recouvrement (30), et une pièce de connexion (73) configurée pour relier la partie du corps (71) à la pièce d'étanchéité (72),
le collecteur (50) comprenant :
une pièce centrale (51) ;
une pièce de couplage de languette (52) déployée vers l'extérieur depuis la pièce centrale (51), et couplée à la languette d'électrode (11) ;
une pièce de couplage du boîtier (53) couplée au boîtier de la batterie (20) et présentant une différence de hauteur relativement à la pièce de couplage de languette (52) ; et
un pont (54) reliant la pièce centrale (51) à la pièce de couplage du boîtier (53) et s'étendant de manière à être incliné dans le sens opposé à l'ensemble d'électrodes (10) lorsque le pont (54) s'écarte de la partie centrale (51),
le pont (54) du collecteur (50) et la pièce de connexion (73) de l'entretoise (70) s'alternant afin de ne pas se chevaucher dans le sens de la hauteur du boîtier de la batterie (20),
une distance entre un axe central du boîtier de la batterie (20) et un bord extérieur (53a) de la pièce de couplage du boîtier (53) étant supérieure à une distance entre l'axe central du boîtier de la batterie (20) et un bord extérieur (52a) de la pièce de couplage de la languette (52) dans le sens d'un rayon du boîtier de la batterie (20).

2. Batterie secondaire cylindrique (1) selon la revendication 1, la pièce de couplage de languette (52) et la pièce de couplage du boîtier (53) ne se chevauchant pas dans le sens de la hauteur du boîtier de la batterie (20).

3. Batterie secondaire cylindrique (1) selon la revendication 1, le pont (54) étant légèrement incliné lorsque le pont (54) s'écarte de la pièce centrale (51).

4. Batterie secondaire cylindrique (1) selon la revendication 1, au moins un trou d'injection (52d) étant défini dans la pièce de couplage de languette (52),
la largeur du trou d'injection (52d) augmentant au fur et à mesure que le trou d'injection (52d) s'éloigne de la pièce centrale (51).

5. Batterie secondaire cylindrique (1) selon la revendication 1, une pièce de moulure (21) emmanchée à la presse entre la plaque de recouvrement (30) et l'ensemble d'électrodes (10) étant disposée sur une circonférence du boîtier de la batterie (20), et
la pièce de couplage du boîtier (53) étant couplée à la pièce de moulure (21).

6. Batterie secondaire cylindrique (1) selon la revendication 5, la pièce d'étanchéité (72) étant configurée pour entourer une circonférence de la plaque de recouvrement (30),
la pièce de couplage du boîtier (53) étant intercalée entre la pièce d'étanchéité (72) et la pièce de moulure (21) afin d'être fixée.

7. Batterie secondaire cylindrique (1) selon la revendication 5, la pièce de couplage de boîtier (53) comprenant :
une zone extérieure (531) chevauchant la pièce de moulure (21) dans le sens de la hauteur du boîtier de la batterie (20) ; et
une zone intérieure (532) disposée à l'intérieur de la zone extérieure et reliée au pont (54).

8. Batterie secondaire cylindrique (1) selon la revendication 5, la pièce de couplage de languette (52) ne chevauchant pas la pièce de moulure (21) dans le sens de la hauteur du boîtier (20).

9. Batterie secondaire cylindrique (1) selon la revendication 5, la différence de hauteur entre la pièce de couplage de languette (52) et la pièce de couplage du boîtier (53) correspondant à une hauteur de la pièce de moulure (21).

10. Batterie secondaire cylindrique (1) selon la revendication 1, la force de couplage entre le boîtier de la batterie (20) et la pièce de couplage du boîtier (53) étant supérieure à la force de couplage entre la languette d'électrode (11) et la pièce de couplage de languette (52).

11. Batterie secondaire cylindrique (1) selon la revendication 1, une pièce de moulure (21) emmanchée à la presse entre la plaque de recouvrement (30) et l'ensemble d'électrodes (10) étant disposée sur une circonférence du boîtier de la batterie (20), et
la pièce de couplage de boîtier (53) étant soudée sur une surface plane (21a) de la pièce de moulure (21).

12. Batterie secondaire cylindrique (1) selon la revendication 11, un cordon de soudure (53d) disposé sur la partie de couplage du boîtier (53) étant disposé vers l'intérieur à un intervalle de 0,1 mm ou davantage relativement à une limite de la surface plane (21a).

13. Batterie secondaire cylindrique (1) selon la revendication 1, une hauteur de la partie du corps (71) correspondant à une distance entre le collecteur (50) et la plaque de recouvrement (30).

14. Batterie secondaire cylindrique (1) selon la revendication 1, une distance entre la pièce de connexion (73) et la plaque de recouvrement (30) augmentant progressivement au fur et à mesure du déploiement de la pièce de connexion (73) depuis la partie du corps (71).
